# EUROPÄISCHE PATENTSCHRIFT

(11) **EP 4 191 058 B1**
(45) Veröffentlichungstag und Bekanntmachung des Hinweises auf die Patenterteilung: **13.03.2024**
(21) Anmeldenummer: 23152372.1
(22) Anmeldetag: 29.12.2017
(51) Int. Cl.: F03D 17/00, F03D 13/35

(54) **VERFAHREN ZUR VERMESSUNG VON UNWUCHTEN UND ANSTELLWINKELN UND HALBPROFILEN**
METHOD FOR MEASURING IMBALANCES AND ANGLES OF ATTACK AND HALF-PROFILES
PROCÉDÉ POUR MESURER DES DÉSÉQUILIBRES ET DES ANGLES D'ATTAQUE ET DES DEMI-PROFILS

(43) Veröffentlichungstag der Anmeldung: 07.06.2023
(62) Teilanmeldung aus: 17832248.3
(73) Patentinhaber: Windcomp GmbH, 10999 Berlin (DE)
(72) Erfinder: LUCKS, Christoph, 22303 Hamburg (DE)
(74) Vertreter: Raffay & Fleck

(56) Entgegenhaltungen:
- EP-A1- 3 002 455
- DE-A1-102010 024 532
- DE-A1-102015 121 981
- US-A1- 2009 266 160

## Beschreibung

Die Erfindung betrifft die Vermessung von Rotoren, insbesondere von Windenergieanlagen.

Sie betrifft insbesondere ein Verfahren zur Ermittlung und/oder Vermessung einer Unwucht basierend auf Messungen auf mindestens einer Messstrecke.

Die Erfindung ermöglicht es, kontaktlos Unwuchten zu erfassen und zu analysieren, insbesondere mit mobilen und/oder auf dem Erdboden aufgestellten Messeinrichtungen.

Sie betrifft daneben ein Verfahren zur Bestimmung des absoluten Pitchwinkels und/oder zur Vermessung eines Halbprofils eines Rotorblattes und ein Verfahren zum Ermitteln einer Torsion des Rotorblattes als Abweichung zwischen zwei Pitchwinkeln des Rotorblatts.

Durch die Erfindung lässt sich im Gegensatz zur Lösung der EP 2582970 A1 der absolute Pitchwinkel eines Rotorblattes im Betrieb bestimmen, ohne dass Angaben über das Rotorblatt oder Referenzpunkte mit bekannter Lage zur Pitchachse oder Rotorachse notwendig wären, insbesondere mit mobilen und/oder auf dem Erdboden aufgestellten Messeinrichtungen.

Aus der EP 2582970 A1 ist eine Lösung zur Bestimmung der geometrischen Anordnung, nämlich der (Auf-)Teilung von einer Mehrzahl von Rotorblättern eines Rotors innerhalb ihrer Rotationsebene bekannt, bei deren Bestimmung auch eine Abweichung dieser (Auf-)Teilung von ihrem Sollwert bestimmt werden kann. Daraus kann indirekt eine Unwucht der Rotorblätter bestimmt werden, sofern sie sich aus Abweichungen von einer gleichmäßigen (Auf-)Teilung ergeben. Dies erfolgt durch das Messen von mindestens zwei Messlinien und dem Bestimmen einer Hinterkante auf einem gemessenen, vermeintlichen und schrägen Profil auf dem Rotorblatt. Im Gegensatz dazu erfolgt die Bestimmung der Unwucht in dieser Erfindung unabhängig einer zweiten Messstrecke und unabhängig des Profils der Rotorblätter und basiert nicht auf die Sollwerte der geometrischen Aufteilung aller Rotorblätter und kann somit auch Unwuchten, die aus anderen Gegebenheiten resultieren, erkennen und vermessen.

Zur Messung gemäß des Standes der Technik, wie zum Beispiel gemäß der EP 2582970 A1, bedarf es mehrerer bekannter Messgrößen, wie Referenzpunkte, oder Entfernungen, sowie weiterer Angaben zum Rotorblatt, womit eine wahre dynamische, insbesondere mobile und flexible Messung und Auswertung solcher Messwerte z.B. hinsichtlich absoluter Pitchwinkel ohne weitere Angaben nicht möglich ist.

Der Erfindung liegt die Aufgabe zugrunde, kontaktlos und/oder unabhängig von weiteren Messinstrumenten, insbesondere weiteren Sensoren wie z. B. in einem Rotor oder einer Windenergieanlage befestigte Messmittel, wie Dehnungsstreifen, Rotationsmessern etc., insbesondere unabhängig von ortsfesten Ausgangspunkten als Referenzpunkt der Messstrecke insbesondere unabhängig von ortsfesten Ausgangspunkten als Referenzpunkt der Messstrecke und/oder unabhängig von weiteren Informationen bezüglich der Ausgestaltung, insbesondere der Geometrie der Rotorblätter, eine Ermittlung und/oder Vermessung einer Unwucht und/oder eine Bestimmung des absoluten Anstellwinkels und/oder eine Vermessung eines Halbprofils und/oder ein Ermitteln einer Torsion des Rotorblattes zu ermöglichen, insbesondere mit mobilen und/oder auf dem Erdboden aufgestellten Messeinrichtungen, insbesondere somit unabhängig von ortsfesten Bezugspunkten.

Gelöst wird dies durch Anspruch 1. Die abhängigen Ansprüche 2 bis 6 geben vorteilhafte Weiterbildungen an.

In dieser Anmeldung stellt eine Messstrecke, insbesondere die Linie auf der eine Entfernung gemessen wird, insbesondere die Linie, auf die ein Laserstrahl, der zur Entfernungsmessung genutzt wird, ausgesandt wird und sich ausbreitet und insbesondere auch reflektiert, insbesondere unabhängig von weiteren aufgebrachten Sensoren auf einem Gegenstand, wird, insbesondere die Linie zwischen Messpunkt und Messgerät, dar, wobei sich der Messpunkt auf der Messstrecke verlagern kann, insbesondere der Messpunkt auf der Messstrecke und somit der Endpunkt der Messstrecke variable ist, je nachdem wo die Messstrecke ausgehend vom Messgerät das erste Mal einen reflektierenden und/oder absorbierenden Gegenstand trifft. Mathematisch betrachtet handelt es sich bei der Messstrecke somit um einen Strahl, insbesondere ausgehend von dem Messgerät. Ein eine Messstrecke durchstreichender Gegenstand, beispielsweise ein Rotorblatt, kommt an unterschiedlichen Punkten seiner Oberfläche mit einem entlang der Messstrecke leuchtenden Laserstrahl in Kontakt. Die Linie über die Oberflächenpunkte, die, insbesondere nacheinander, Kontakt mit der Messstrecke und/oder dem Laserstrahl auf einer Messstrecke haben, bilden eine Messlinie auf dem Gegenstand, insbesondere Rotorblatt aus, auf der an Messpunkten Messwerte, beispielsweise in Form von Entfernungen zwischen Messgerät und Oberflächenpunkt genommen werden können.

Dabei sind die Messlinien auf dem rotierenden Gegenstand, insbesondere Rotorblatt ortsfest, drehen sich also mit dem Rotorblatt um eine Achse des Rotors, dessen Teil der Rotor ist. Auch ist es möglich mittels eines Lasers mehrere Messstrecken und damit Messwerte auf mehreren Messlinien auf einem Rotorblatt zu erfassen. Dazu kann der Laserstrahl insbesondere in schneller zeitlicher Abfolge so um- und/oder abgelenkt werden, dass er sich entlang unterschiedlicher Messstrecken ausbreitet. Dadurch können jeweils zeitversetzt zueinander Messwerte an Messpunkten auf unterschiedlichen Messlinien der Messstecken genommen werden.

Dabei erfolgt die kontaktlose Messung für die Verfahren gemäß Anspruch 1 bis 6, insbesondere bei allen erfindungsgemäßen Verfahren, erfindungsgemäß zeitaufgelöst.

Die kontaktlosen Messungen können beispielsweise über einen Laser durchgeführt werden. Für eine Entfernungsmessung ist beispielsweise eine Laufzeitmessung denkbar. Dabei kann ein berührungsloses Abstandsmesssystem oder Entfernungsmesssystem eingesetzt werden.

Die Verfahren sind besonders geeignet, an Rotoren einer Windenergieanlage eingesetzt zu werden. Eine Windenergieanlage weist mindestens zwei, insbesondere zwei, drei oder vier, längliche, an einer gemeinsamen Nabe gelagerte Rotorblätter auf, die Teil eines um eine Rotorachse rotierenden Rotors sind.

Die Verfahren beinhalten insbesondere auch das Ausrichten mindestens eines berührungslosen Abstandsmesssystems so, dass seine Messstrecke vom Rotorblatt durchstrichen wird oder auf die bzw. entlang der mindestens einen Messstrecken, die von dem mindestens einem Rotorblatt überstrichen werden und bei mehreren Messstrecken diese unterschiedliche Abstände zur Nabe aufweisen. Dabei ist das berührungslose Abstandsmesssystem geeignet, auf der mindestens einen Messstrecke um maximal 200 Millisekunden zeitversetzte Abstände zu erfassen.

Bei der Erfassung des zeitlichen Abstandes zwischen der Erfassung von Messwerten, kommt es darauf an, dass bei der Passage eines Rotorblattes durch die Messstrecke ausreichend viele Messwerte genommen werden können, um beispielsweise ein aussagekräftiges Profil erstellen oder ein genauer Zeitpunkt des Durchstreichens der Rotorblätter bestimmen zu können oder ausreichende Genauigkeit für weitere Aussagen zu erhalten und/oder dass auch die Randbereiche, wie Vorderkante (leading edge) und Hinterkante (trailing edge) des Rotorblattes, ausreichend genau erfasst werden. Dies ist bei üblichen Betriebsbedingungen einer Windenergieanlage dann gegeben, wenn die Messung an zwei Messpunkten in einem Abstand von höchsten 200 Millisekunden erfolgen kann bzw. erfolgt. Bei Windenergieanlagen mit hohen Rotationsgeschwindigkeiten bzw. langen Flügellängen kann eine deutlich schnellere Erfassung notwendig sein, insbesondere dann, wenn Messwerte am äußeren Ende und/oder Bereich der Rotorblätter erfasst werden sollen. Hier kann eine zeitversetzte Messung mit Zeitverzögerung und/oder ein maximaler zeitlicher Abstand von höchsten fünf Millisekunden angebracht sein. Je mehr Messwerte pro Rotorblatt erfasst werden sollen, umso schneller müssen derartige Messungen erfolgen. In der Regel werden mindestens zehn Messwerte pro Messlinie und/oder Messstrecke auf einem Rotorblatt erfasst werden müssen, um eine ausreichende Datenbasis erzeugen zu können. Werden auf mehr als zwei Messstrecken Messwerte erfasst, ist insbesondere der Abstand der Messungen entsprechend kleiner zu wählen. Die genannte Bedingung kann in der Regel dann erfüllt werden, wenn pro Messstrecke innerhalb von 200 ms eine Messung durchgeführt wird. Wie oben beschrieben kann das Zeitintervall bei besonderen Anlagen oder weit außen am Rotorblatt liegenden Messlinien deutlich geringer zu wählen sein.

Die Aufgabe wird insbesondere gelöst durch ein Verfahren zur Ermittlung und/oder Vermessung einer Unwucht, insbesondere zumindest einer statischen Unwucht, und/oder eines exzentrischen Massenmoments eines um eine Rotorachse drehenden Rotors. Dabei weist der Rotor mindestens zwei Rotorblätter auf, wobei durch kontaktlose und zeitaufgelöste Messung das Durchstreichen der Rotorblätter zumindest einer Messstrecke während der Rotation des Rotors um die Rotorachse erfasst wird.

Es ist also zumindest eine Messstrecke vorzusehen, die beim Rotieren der Rotorblätter um die Rotorachse von den Rotorblättern durchstrichen wird. Dabei wird das Durchstreichen der Rotorblätter durch die Messstrecke erfasst. Dies kann beispielsweise durch eine Entfernungsmessung erfolgen, die eine höhere oder unendliche Entfernung ausweist, wenn die Messstrecke nicht von einem Rotorblatt durchstrichen wird. Sie weist dann eine kürzere Entfernung, nämlich die Entfernung zwischen Messgerät und Rotorblatt aus, wenn das Rotorblatt die Messstrecke durchstreicht. Somit kann auch ohne einen freien Hintergrund gearbeitet werden, wenn zumindest bei Nichtdurchstreichen der Rotorblätter durch die Messstrecke eine andere und/oder unterschiedliche, insbesondere unterscheidbare, Entfernung ausgewiesen wird. Aber auch andere Arten der Erfassung des Durchstreichens der Messstrecke sind denkbar.

Dabei kann zumindest eine statische und/oder dynamische Unwucht erfasst werden. Zumindest wird jedoch insbesondere eine statische Unwucht erfasst.

Die Erfassung einer solchen Unwucht kann dabei insbesondere mittels der Erfassung von unterschiedlichen Zeitspannen zwischen dem Durchstreichen der Messstrecke von unterschiedlichen, insbesondere aufeinanderfolgenden Rotorblättern erfolgen.

Dementsprechend beinhaltet das Verfahren insbesondere das Ermitteln von Zeitspannen zwischen dem Durchstreichen der Messstrecke von unterschiedlichen, insbesondere aufeinander folgenden, Rotorblättern.

Insbesondere kann dabei durch einen Vergleich, insbesondere eine Differenzbildung, der Zeitspannen zwischen dem Durchstreichen der Messstrecke der Rotorblätter, insbesondere zwischen jeweils zwei aufeinanderfolgenden Rotorblätter, eine Unwucht erkannt und/oder vermessen bzw. bestimmt werden. Daher beinhaltet das Verfahren insbesondere das Ermitteln von Differenzen zwischen den Zeitspannen zwischen dem Durchstreichen, insbesondere jeweils aufeinanderfolgender Rotorblätter.

Mit besonderem Vorteil werden die Zeitspannen, insbesondere vor einer Differenzbildung und/oder vor einem Vergleich auf die Rotationsgeschwindigkeit normiert. Dabei ist insbesondere bei unterschiedlichen Rotationsgeschwindigkeiten um die Rotorachse hilfreich, insbesondere wenn eine Vielzahl von Zeitspannen, die bei unterschiedlichen Rotationen, insbesondere unterschiedlichen Rotationsgeschwindigkeiten, erfasst worden sind, verglichen und/oder aggregiert werden sollen. Zu diesem Zweck kann insbesondere auch die Rotationsgeschwindigkeit, insbesondere kontaktlos, erfasst werden. Dies erfolgt insbesondere vorteilhafterweise mittels der ohnehin eingesetzten Messstrecke. Dies kann beispielsweise durch Auswerten der Zeitspannen zwischen dem Durchstreichen der Rotorblätter, insbesondere der Zeitspanne zwischen dem Durchstreichen mehrerer Rotorblätter, insbesondere der Anzahl der Rotorblätter, die im Rotor enthalten sind, erfolgen.

Somit wird mit besonderem Vorteil die Rotationsgeschwindigkeit aus den Daten der kontaktlosen und zeitaufgelösten Messung ermittelt.

Mit besonderem Vorteil werden die Zeitspannen oder normierten Zeitspannen zwischen dem Durchstreichen so den Rotorblättern des Rotors zugeordnet, dass die Zeitspannen oder normierten Zeitspannen dem Rotorblatt zugeordnet werden, dass am Ende der Zeitspanne die Messstrecke durchstreicht. Insbesondere wird dabei jeweils die Zeitspanne oder normierte Zeitspanne einem Rotorblatt zugeordnet, die zwischen dem Durchstreichen des vorausgehenden Rotorblattes durch die Messstrecke und diesem Rotorblatt verstrichen ist. Dadurch können die Zeitspannen oder normierten Zeitspannen jeweils als Maß für das durch das Rotorblatt ausgeübte Drehmoment verwendet werden. Dadurch lassen sich insbesondere statische Unwuchten schnell erkennen und einfach einem Rotorblatt zuordnen.

Mit besonderem Vorteil ist die Messstrecke so angeordnet und/oder wird die Messstrecken so angeordnet und/oder ausgerichtet, dass die Rotorblätter des Rotors die Messstrecke in einem Kreissegment eines Kreises um die Rotorachse mit einer Kreissegmenterstreckung von +/- 20°, insbesondere +/- 10°, um die Vertikale durchstreichen. Mit besonderem Vorteil durchstreichen die Rotorblätter die Messstrecke auf einer Vertikalen durch die Rotorachse. Durch eine solche Ausgestaltung sind die Zeitspannen besonders aussagekräftig in Bezug auf eine, insbesondere statische, Unwucht. Die Winkelangaben beziehen sich auf eine Teilung des Vollkreises oder Vollwinkels in 360°.

Unter einem exzentrischen Massenmoment eines Rotors wird insbesondere ein Massenmoment außerhalb der Rotorachse verstanden.

Die Messstrecke ist insbesondere so ausgerichtet, dass die Rotorblätter die Messstrecke außerhalb einer Nabe und insbesondere mit einem Bereich der Rotorblätter durchstreichen, der zumindest 5 m, insbesondere mindestens 15 m, außerhalb und/oder entfernt von der Rotorachse liegt.

Eine Normierung von Zeitspannen bezüglich der Rotationsgeschwindigkeit ist insbesondere durch Division der Zeitenspannen durch einen zumindest für gleiche Rotationsgeschwindigkeiten gleichen Wert oder einem Wert proportional zum Kehrwert der Rotationsgeschwindigkeit oder durch Substraktion eines zumindest für gleiche Rotationsgeschwindigkeiten gleichen Werts oder einem Wert proportional zum Kehrwert der Rotationsgeschwindigkeit von den Zeitenspannen zu erreichen. Insbesondere kann dies durch Division der Zeitspannen durch die Dauer für einen Umlauf des Rotors um die Rotorachse erfolgen.

Mit besonderem Vorteil erfolgt eine Mittelung der einem Rotorblatt zugeordneten Zeitspannen über eine Vielzahl von Zeitspannen aus unterschiedlichen Rotationen, insbesondere unter Normierung der Zeitspannen bezüglich der Rotationsgeschwindigkeit vor der Mittelung.

Mit besonderem Vorteil wird das Durchstreichen der Messstrecke der Rotorblätter mindestens über zehn Rotationen des Rotors erfasst. Insbesondere werden Zeitspannen von mindestens zehn Rotationen gemittelt. Dabei sind nicht alle Zeitspannen der Rotationen zu einem Mittelwert zu Mitteln, sondern insbesondere die einem Rotorblatt zugeordneten Zeitspannen jeweils zu Mitteln, sodass für jedes Rotorblatt ein gemittelter Wert erhalten wird.

In einer Ausgestaltung kann das Verfahren unter Rotation des Rotors mit konstanter Rotationsgeschwindigkeit durchgeführt werden.

Insbesondere wird das Verfahren unter Antrieb des Rotors allein durch Wind durchgeführt.

Mit besonderem Vorteil erstreckt sich die Messstrecke in einer Ebene, in der die Rotorachse liegt und/oder mit einem Winkel zu einer solchen Ebene von weniger als +/-20° zu dieser Ebene. Insbesondere liegt die Messstrecke in einer vertikalen Ebene.

Mit besonderem Vorteil wird die Messstrecke für die Dauer des Verfahrens, insbesondere aber zumindest über die Dauer einer Ermittlung, insbesondere mindestens über 5 Minuten, im Verhältnis zur Rotorachse und/oder zur Erdoberfläche statisch und/oder konstant gehalten.

Mit besonderem Vorteil umfasst das Verfahren auch die Aufnahme von Halbprofilen und/oder Abständen der Rotorblätter und/oder der Punkte und/oder mindestens eines Punktes jedes Rotorblattes, der die Messstrecke durchstreicht, zum Ausgangspunkt der Meßvorrichtung. Mit besonderem Vorteil werden derartige Werte verwendet, um ein Drehen und/oder Verändern der Rotorachse und/oder ein verändern des Yaw-Winkels und/oder ein Schwingen des Turms mathematisch aus den Messwerten des Durchstreichens bzw. der Zeitspannen heraus zu rechnen. Denn ein Verändern des Yaw-Winkels und/oder der Lage der Rotorachse haben Einfluss auf die relative Lage der Messstrecke zum Rotor und können somit, wenn auch nur in relativ geringem Umfang, die Messung und/oder die Zeitspannen beeinflussen. Durch Vermessung der Abstände und/oder Halbprofile, kann die Veränderung der Lage der Rotorachse erfasst und somit dahingehend berücksichtigt werden, dass die Zeitspannen und/oder Messung entsprechend korrigiert werden.

Mit besonderem Vorteil beinhaltet das Verfahren eine Auswertung der Messung, insbesondere der Zeitspannen, die (relative) Gewichtsdifferenzen und/oder (relative) Drehmomente der Rotorblätter ausweist. Dies kann insbesondere durch einen Vergleich der den Rotorblättern zugeordneten Zeitspannen erfolgen. insbesondere wird das Verhältnis der Zeitspannen, die den einzelnen Rotorblättern zugeordnet sind, als Maß für die relativen Gewichte der Rotorblätter verwendet.

Gelöst wird die Aufgabe auch durch ein Verfahren zur Bestimmung des Anstellwinkels, insbesondere des absoluten Pitchwinkels und/oder zur Vermessung mindestens eines Halbprofils eines Rotorblattes eines um eine Rotorachse drehenden Rotors.

Dabei wird durch kontaktlose Entfernungsmessung auf mindestens zwei Messstrecken, die nicht parallel zur Rotorachse liegen und so ausgerichtet sind, dass sie von einem Rotorblatt zumindest auch gleichzeitig durchstrichen werden, mindestens beim Durchstreichen des Rotorblattes durch die Messstrecken auf jeder Messstrecke mindestens zwanzig Entfernungsmesswerte, insbesondere an mindestens zwanzig Messpunkten auf dem Rotorblatt erfasst.

Unter einem zumindest auch gleichzeitigen Durchstreichen ist eine Situation zu verstehen, in der zumindest zu einem Zeitpunkt von einem Rotorblatt die mindestens zwei Messstrecken durchstrichen werden. Aufgrund der meist variierende und überwiegend mit größerem Abstand zur Rotorachse verjüngende Breite von Rotorblättern über ihre Längserstreckung und der Anordnung der Meßstrecken, so dass sie vom Rotorblatt in unterschiedlichen Abständen von der Rotorachse durchstrichen werden, und der unterschiedlichen Umfangsgeschwindigkeit am Ort des Durchstreichens der Rotorblätter ergibt sich häufig eine Situation, in der die Rotorblätter zwar mit ihrer vollständigen Breite die Messstrecken durchstreichen dies aber nicht zeitlich vollständig deckungsgleich erfolgt. Somit ist das Durchstreichen insofern nicht vollständig gleichzeitig, dass Anfangs und Endpunkt in Bezug auf das Durchstreichen der unterschiedlichen Messstrecken nicht deckungsgleich sind. Vielmehr ist es zumindest auch gleichzeitig, so dass während des Durchstreichens einer ersten der Messstrecken auch eine zweite der Messstrecken durchstrichen wird.

Mit besonderem Vorteil sind die mindestens zwei Messstrecken so ausgerichtet, dass sie innerhalb einer gemeinsamen Ebene, die insbesondere parallel zur Rotorachse und/oder mit einem Winkel von weniger als +/-20° zur Rotorachse und/oder vertikal angeordnet ist, verlaufen.

Dabei sind die Messstrecken so ausgerichtet und/oder angeordnet, dass sie von dem Rotorblatt an unterschiedlichen Abständen von der Rotorachse durchstrichen werden. Insbesondere liegen also die Messlinien auf dem Rotorblatt so, dass sie unterschiedliche Abstände zur Rotorachse aufweisen.

Dabei können insbesondere die Winkel zwischen den Messstrecken und der Horizontalen gemessen werden. Insbesondere gehen die Messstrecken von einem gemeinsamen Punkt aus und/oder werden die Entfernungsmesswerte so erfasst und/oder umgerechnet, dass sie die Entfernung von einem gemeinsamen Punkt und/oder einer gemeinsamen, insbesondere vertikalen und senkrecht zur Rotorachse stehenden Ebene angeben.

Erfindungsgemäß wird mindestens eine erste und eine zweite , insbesondere mindestens zehn,Verbindungslinie jeweils zwischen mindestens zwei Interpolationspunkten, die jeweils durch einen Messpunkt und/oder Punkt auf einer Interpolation der Messpunkte auf einer Messlinien gegeben sind, ermittelt, wobei die Interpolationspunkte, insbesondere die Interpolationspunkte einer jeden Verbindungslinien, mindestens auf zwei unterschiedlichen Messlinien liegen und wobei die Messlinien jeweils durch die Verbindung der Messpunkte, an denen die Messwerte jeweils einer Messstrecke auf dem Rotorblatt genommen wurden, gegeben sind. Dabei liegt jeweils zwischen dem Durchstreichen der Interpolationspunkte, zwischen denen eine Verbindungslinie liegt, durch die Messstrecken ein maximaler zeitlicher Abstand von 200 ms und/oder ein maximaler zeitlicher Abstand, in dem der Rotor maximal um 0,5° um die Rotationsachse rotiert ist.

Mit besonderem Vorteil kann durch eine solche Verbindungslinie, insbesondere mehrerer solcher Verbindungslinien an unterschiedlichen Interpolationspunkten, zumindest ein Teil der Oberfläche des Rotorblatts zumindest näherungsweise rekonstruiert werden.

Mit besonderem Vorteil kann unter Kenntnis der Anordnung der Messstrecke, insbesondere der Winkel der Meßstrecken zur Horizontalen, kann dann an einer Stelle zwischen den Interpolationspunkten, beispielsweise durch einen virtuellen horizontalen Schnitt durch die zumindest teilweise und zumindest näherungsweise rekonstruierte Rotorblattoberfläche ein Teilquerschnitt durch das Rotorblatt und/oder ein Rotorblatthalbprofil gewonnen werden. Alternativ kann ein Halbprofil und/oder Teilquerschnitt auch dadurch gewonnen werden, dass auf den Verbindungslinien abhängig von den Winkeln zwischen den Messstrecken und der Horizontalen Punkte bestimmt werden, die zusammen in einer Ebene, insbesondere in einer Ebene senkrecht zur Rotorblattlängsachse, liegen und ein Halbprofil darstellen.

Anhand der mindestens zwei Verbindungslinien oder davon gewonnenen bzw. abgeleiteten Werten und/oder anhand eines Teilquerschnitts und/oder Rotorblatthalbprofils kann mindestens ein Anstellwinkel, insbesondere absoluter Pitchwinkel des Rotorblattes ermittelt werden.

Erfindungsgemäß kann also durch Gewinnung von Entfernungsmessungen an einem Rotorblatt an unterschiedlichen Abständen zur Rotorachse, insbesondere Entfernungsmessungen die mindestens zwei schräge Halbprofile und/oder Teilquerschnitte des Rotorblattes wiedergeben, ein korrektes Halbprofil und/oder ein Anstellwinkel, insbesondere absoluter Pitchwinkel bestimmt werden. Schräg bedeutet dabei insbesondere, dass sie nicht innerhalb einer Ebene senkrecht zur Rotorlängsachse liegen. Sie sind dabei zum einen in der Regel korrespondierend zum Winkel zwischen der jeweiligen Messstrecke und der Horizontalen gekippt und verlaufen insbesondere Kreisbogen ringförmig über die Punkte der Rotorblattoberfläche, die beim Durchstreichen der Messstrecke diese durchstreichen.

Dazu wird insbesondere mit Hilfe der Verbindungslinien und einem virtuellen Schnitt durch die Verbindungslinien ein Teilprofil und/oder Halbprofil ermittelt, das insbesondere senkrecht zur Längserstreckung des Rotorblattes verläuft und insbesondere über eine gerade Linie auf dem Rotorblatt verläuft.

Mit besonderem Vorteil wird aus den Messwerten an den Messpunkten einer Messlinie jeweils ein Halbprofil errechnet. Dabei verläuft das Halbprofil insbesondere senkrecht zu einer Kante, insbesondere Hinterkante des Rotorblattes und/oder senkrecht zu der mindestens ersten oder zweiten Verbindungslinie und/oder parallel zur Rotationsachse und/oder in einer Ebene senkrecht zur Längserstreckung des Rotorblatts und/oder parallel zu einer Ebene, die senkrecht zur Rotationsachse verläuft und insbesondere einen Schnitt durch das Rotorblatt darstellt, der in einer Ebene parallel zur Rotorachse und insbesondere senkrecht zur Längserstreckung des Rotorblattes verläuft. Dabei kann das Halbprofil auch ein gekrümmtes Halbprofil sein, das insbesondere über einen Kreisbogenabschnitt verläuft, der insbesondere mit dem Kreisbogenabschnitt übereinstimmt, der durch die Punkte gebildet wird, die die Messstrecke durchstreichen.

Insbesondere wird pro Messstrecke zunächst ein kreisbogenförmig verlaufendes und schräges Halbprofil, insbesondere als Interpolationen der Messpunkte einer Messlinie, errechnet. Dieses Halbprofil liegt insbesondere in einer Ebene, die nicht senkrecht zur Längserstreckung des Rotorblattes verläuft, sondern gegenüber einer Ebene senkrecht zur Längserstreckung des Rotorblattes um einen Winkel verkippt ist, der mit dem Winkel zwischen der entsprechenden Messstrecke und der Horizontalen korrespondiert, insbesondere entspricht. Insbesondere wird darauf basierend unter Verwendung von Interpolationspunkten auf den kreisbogenförmig verlaufenden schrägen Halbprofilen und Verbindungslinien zwischen den Interpolationspunkten ein Halbprofil ermittelt, dass insbesondere senkrecht zu einer Kante, insbesondere Hinterkante des Rotorblattes und/oder senkrecht zu der mindestens ersten oder zweiten Verbindungslinie und/oder senkrecht zu einer Ebene senkrecht zur Rotationsachse verläuft und insbesondere einen Schnitt durch das Rotorblatt darstellt, der in einer Ebene parallel zur Rotorachse und insbesondere senkrecht zur Längserstreckung des Rotorblattes verläuft und insbesondere entlang einer geraden Linie verläuft.

Insbesondere werden zur Ermittlung der Lage des Halbprofils, das insbesondere senkrecht zu Längserstreckung des Rotorblattes verläuft und insbesondere entlang einer geraden Linie verläuft, die Winkel zwischen den Messstrecken der verwendeten schrägen Halbprofile zur Horizontalen verwendet. Dadurch kann insbesondere ermittelt werden, wie ein Halbprofil in einer Ebene senkrecht zur Rotationsachse relativ zu den schrägen Halbprofilen zu liegen hat.

Mit besonderem Vorteil wird zur Interpolation einer vermeintlichen Rotorblattoberfläche eine Vielzahl von Verbindungslinien bestimmt, insbesondere mindestens zehn Verbindungslinien, diese Schar von Verbindungslinien kann dann als vermeintliche Rotorblattoberfläche verwendet werden und/oder es kann zwischen ihnen eine interpolierte Fläche bestimmt werden, die dann als vermeintliche Rotorblattoberfläche verwendet wird.

Mit besonderem Vorteil ist das Verfahren als Verfahren zum Ermitteln des absoluten Pitchwinkels ausgebildet. Der absolute Pitchwinkel wird insbesondere basierend auf Halbprofilen in einer Ebene senkrecht zur Rotorblattlängserstreckung und/oder einer vermeintlichen Rotorblattoberfläche bestimmt und/oder der Rotorachse. Insbesondere kann eine Verknüpfungslinie zwischen Vorderkante (leading Edge) und Hinterkante (trailing Edge) der vermeintlichen Rotorblattoberfläche und/oder solchen Halbprofilen bestimmt werden und insbesondere der Winkel einer solchen Verknüpfungslinie zu einer Ebene senkrecht zur Rotorachse und/oder Rotorblattlängserstreckung und/oder einer vermeintlichen Rotorblattoberfläche bestimmt werden und als absoluter Pitchwinkel verwendet werden.

Mit besonderem Vorteil wird die Lage der Rotorachse aus den Messwerten auf den Messstrecken ermittelt, insbesondere durch Mittlung der Messwerte. Insbesondere werden dazu mindestens zwei Messstrecken eingesetzt, die von den Rotorblättern an unterschiedlichen Rotationswinkeln der Rotation um die Rotorachse durchstrichen werden. Auf Basis von Messwerten auf diesen Messstrecken kann die Rotationsebene der Rotoren bestimmt werden und damit näherungsweise auf die Lage der Rotorachse geschlossen werden. Alternativ kann auch von einer Bestimmung der Lage der Rotorachse abgesehen werden und allein eine Ebene senkrecht zu der Rotorachse durch solche Messwerte bestimmt werden. Dies ist ausreichend, um den absoluten Pitchwinkel, wie oben beschrieben, zu ermitteln, da dieser lediglich zu einer Ebene senkrecht zur Rotorachse bestimmt wird und dafür die Kenntnis über die Lage der Rotorachse nicht vollständig erforderlich ist, sondern die Kenntnis über die Lage einer Ebene senkrecht zur Rotorachse ausreicht.

Mit besonderem Vorteil wird der absolute Pitchwinkel ermittelt als Winkel zwischen einer Ebene senkrecht zur Rotorachse und einer Linie, die parallel zur Verknüpfungslinie von Vorderkante (leading Edge) und Hinterkante (trailing Edge) des Rotorblattes, eines Teilprofils in einer Ebene senkrecht zur Längserstreckung des Rotorblattes und/oder einer vermeidlichen Rotorblattoberfläche und/oder einer Linie, die senkrecht zu einer Kante, insbesondere Hinterkante (trailing Edge), des Rotorblattes und/oder senkrecht zu mindestens der ersten oder zweiten Verbindungslinie verläuft, wobei die Linie die erste und eine zweite Verbindungslinie insbesondere schneidet und/oder senkrecht dazu verläuft, wobei die Interpolationspunkte, zwischen denen sich die erste Verbindungslinie erstreckt einen maximalen zeitlichen Abstand von 0,5 Sekunden insbesondere maximal 200 ms und/oder einen maximalen Abstand, in dem der Rotor maximal um 1°, insbesondere 0,5°, um die Rotorachse rotiert ist, von der Vorderkante des Rotorblattes aufweisen und die Interpolationspunkte, zwischen denen sich die zweite Verbindungslinie erstreckt, einen maximaler zeitlicher Abstand von 1/2 s, insbesondere maximal 1/5 s und/oder einer maximalen zeitlichen Abstand, in dem der Rotor maximal um 1°, insbesondere 0,5° um die Rotationsachse rotiert ist, von der Hinterkante (trailing edge) des Rotorblattes aufweisen.Gelöst wird die Aufgabe auch durch ein Verfahren zum Ermitteln einer Torsion des Rotorblattes als Abweichung zwischen zwei Pitchwinkeln, wobei die Pitchwinkel als Winkel zwischen einer Ebene senkrecht zur Rotorachse und einer Linie, die parallel zur Verknüpfungslinie von Vorderkante (leading Edge) und Hinterkante (trailing Edge) des Rotorblattes, eines Teilprofils in einer Ebene senkrecht zur Längserstreckung des Rotorblattes und/oder einer vermeidlichen Rotorblattoberfläche und/oder einer Linie, die senkrecht zu einer Kante, insbesondere Hinterkante (trailing Edge), des Rotorblattes und/oder senkrecht zu der mindestens ersten oder zweiten Verbindungslinie verläuft, wobei die Interpolationspunkte, zwischen denen sich die erste Verbindungslinie erstreckt einen maximalen zeitlichen Abstand von 0,5 Sekunden insbesondere maximal 200 ms und/oder einen maximalen Abstand, in dem der Rotor maximal um 1°, insbesondere 0,5°, um die Rotorachse rotiert ist, von der Vorderkante des Rotorblattes aufweisen und die Interpolationspunkte, zwischen denen sich die zweite Verbindungslinie erstreckt, einen maximaler zeitlicher Abstand von 1/2 s, insbesondere maximal 1/5 s und/oder einer maximalen zeitlichen Abstand, in dem der Rotor maximal um 1\°, insbesondere 0,5° um die Rotationsachse rotiert ist, von der Hinterkante (trailing edge) des Rotorblattes aufweisen, wobei die erste zur Ermittlung des ersten Pitchwinkels benutzten Linie zwischen bei Messpunkten einer ersten und einer zweiten Messlinie liegt und die zweite zur Ermittlung des zweiten Pitchwinkels benutzten Linie zwischen Messpunkten einer dritten und der zweiten oder der dritten und einer vierten Messlinie liegt, wobei sich die Neigungswinkel der Messstrecke der unterschiedlichen Messlinien gegenüber der Horizontalen insbesondere wie folgt zueinander verhalten:
Neigungswinkel der Messstrecke der Messpunkte der ersten Messlinie < Neigungswinkel der Messstrecke der Messpunkte der zweiten Messlinie < Neigungswinkel der Messstrecke der Messpunkte der dritten Messlinie
   und/oder
Neigungswinkel der Messstrecke der Messpunkte der ersten Messlinie < Neigungswinkel der Messstrecke der Messpunkte der zweiten Messlinie < Neigungswinkel der Messstrecke der Messpunkte der dritten Messlinie < Neigungswinkel der Messstrecke der Messpunkte der vierten Messlinie.

Alternativ kann die Abweichung zwischen zwei Pitchwinkeln auch basierend auf Halbprofilen oder Teilquerschnitten, die in zwei unterschiedlichen Ebenen senkrecht zur Längserstreckung des Rotorblattes und/oder in zueinander parallelen Ebenen bestimmt werden, insbesondere durch Vergleich dieser und/oder basieren auf den Winkel zwischen den Linien zwischen Vorderkante und Hinterkante in diesen Halbprofilen und/oder Teilquerschnitten.

Gelöst wird die Aufgabe auch durch ein Verfahren zum Ermitteln einer Torsion des Rotorblattes als Winkel zwischen zwei Linien von der Vorderkante zur Hinterkante, insbesondere in zueinander parallelen Ebenen, insbesondere in Ebenen senkrecht zur Längserstreckung des Rotorblattes.

Dazu wird insbesondere zur Erfassung vorgegangen wie im zuvor geschilderten Verfahren und werden dann die Linien von der Vorder- zur Hinterkante bestimmt und der Winkel zwischen diesen bestimmt.

Das Verfahren zur Ermitteln einer Torsion eines Rotorblattes eines um eine Rotorachse drehenden Rotors wird dabei insbesondere so durchgeführt, dass durch kontaktlose Entfernungsmessung auf mindestens zwei Messstrecken, die nicht parallel zur Rotorachse liegen und so ausgerichtet sind, dass sie von einem Rotorblatt zumindest auch gleichzeitig durchstrichen werden, mindestens beim Durchstreichen des Rotorblattes durch die Messstrecken auf jeder Messstrecke mindestens 20 Entfernungsmesswerte, insbesondere jeweils an mindestens 20 Messpunkten auf dem Rotorblatt, erfasst werden, wobei die Winkel zwischen den Messstrecken und der Horizontalen gemessen werden und wobei mindestens eine erste und eine zweite, insbesondere mindestens 10, Verbindungslinie jeweils zwischen mindestens zwei Interpolationspunkten, die jeweils durch einen Messpunkt und/oder Punkt auf einer Interpolationen der Messpunkte einer Messlinie gegeben sind, ermittelt werden, wobei die Interpolationspunkte, insbesondere die Interpolationspunkte jeder Verbindungslinie mindestens auf zwei unterschiedlichen Messlinien liegen und wobei die Messlinien jeweils durch die Verbindung der Messpunkte, an denen die Messwerte jeweils einer Messstrecke auf dem Rotorblatt genommen wurden, gegeben sind, wobei zwischen dem Durchstreichen der Interpolationspunkte einer Verbindungslinie durch die Messstrecken, ein maximaler zeitlicher Abstand von 1/5 s und/oder einer maximaler zeitlicher Abstand liegt, in dem der Rotor maximal um 0,5° um die Rotorachse rotiert ist,
als Winkel zwischen zwei Linien, die jeweils parallel zur Verknüpfungslinie von einer Vorderkante (leading edge) zu einer Hinterkante (trailing edge) des Rotorblattes und/oder die senkrecht zu einer Kante, insbesondere Hinterkante (trailing edge), des Rotorblattes und/oder senkrecht zu mindestens einer ersten oder zweiten Verbindungslinie verlaufen und die insbesondere in zueinander parallelen Ebenen verlaufen, wobei die Linien die erste und eine zweite Verbindungslinie insbesondere schneidet und/oder senkrecht dazu verläuft, wobei die Interpolationspunkte, zwischen denen sich die erste Verbindungslinie erstreckt, einen maximaler zeitlicher Abstand von 1/2 s, insbesondere maximal 1/5 s und/oder einer maximalen zeitlichen Abstand, in dem der Rotor maximal um 1°, insbesondere 0,5° um die Rotorachse rotiert ist, von der Vorderkante (leading edge) des Rotorblattes aufweisen und die Messpunkte, zwischen denen sich die zweite Verbindungslinie erstreckt, einen maximaler zeitlicher Abstand von 1/2 s, insbesondere maximal 1/5 s und/oder einer maximalen zeitlichen Abstand, in dem der Rotor maximal um 1°, insbesondere 0,5° um die Rotorachse rotiert ist, von der Hinterkante (trailing edge) des Rotorblattes aufweisen, bestimmt werden, wobei die erste Line zwischen Interpolationspunkten einer erste und einer zweiten Messlinie liegt und die zweite Linie zwischen Interpolationspunkte einer dritten und der zweiten oder der dritten und einer vierten Messlinie liegt, wobei sich die Neigungswinkel der Messstrecken gegenüber der Horizontalen wie folgt zueinander verhalten:
Neigungswinkel der Messstrecke der Messpunkte der ersten Messlinie < Neigungswinkel der Messstrecke der Messpunkte der zweiten Messlinie < Neigungswinkel der Messstrecke der Messpunkte der dritten Messlinie
   und/oder
Neigungswinkel der Messstrecke der Messpunkte der ersten Messlinie < Neigungswinkel der Messstrecke der Messpunkte der zweiten Messlinie < Neigungswinkel der Messstrecke der Messpunkte der dritten Messlinie < Neigungswinkel der Messstrecke der Messpunkte der vierten Messlinie.

Insbesondere sind die Messstrecken generell so angeordnet, dass sie untereinander einen Winkel von mindestens 5° einschließen und ihr Abstand auf einem Rotorblatt, dass diese zumindest auch gleichzeitig durchstreicht, 1 bis 15 m beträgt. Insbesondere sind so viele Messstrecke so angeordnet, dass ihr maximaler Abstand auf einem Rotorblatt, dass sie gleichzeitig durchstreicht, mindestens 15 m beträgt.

Insbesondere weist die Vorrichtungen zur kontaktlosen Entfernungsmessung entlang von Messstrecken die Verwendung einer mobilen Messvorrichtung auf, wobei die Durchführung insbesondere unabhängig von ortsfesten Referenzpunkten und/oder unabhängig von weiteren Messinstrumenten, insbesondere weiteren Sensoren, insbesondere solchen mit direktem Kontakt oder bekannter Anordnung zum Rotor und/oder unabhängig von weiteren Informationen bezüglich der Ausgestaltung, insbesondere Geometrie der Rotorblätter und/oder Anordnung der Messstrecken und/oder Messvorrichtung relativ zum Rotor. Weitere Vorteile und mögliche Ausführungsformen sollen rein exemplarisch und nicht beschränkend anhand der nachfolgenden Figuren erläutert werden. Dabei zeigen:
- Fig. 1:: eine Seitenansicht einer Windenergieanlage mit einer auf deren Rotor gerichteten Messstrecke,
- Fig. 2:: eine Darstellung der zeitaufgelösten Entfernungsmesswerte gemessen auf der Messstrecke aus Figur 1,
- Fig. 3:: eine Seitenansicht der Windenergieanlage aus Fig. 1 mit zwei auf deren Rotor gerichteten Messstrecken,
- Fig. 4:: eine Seitenansicht auf den Rotor aus Figur 3,
- Fig. 5:: eine Frontalansicht auf den Rotor aus Fig. 4,
- Fig. 6:: eine Darstellung von zwei schrägen Halbprofilen mit Verbindungslinien,
- Fig. 7:: eine Darstellung von zwei schrägen Halbprofilen mit Verbindungslinien und einem Halbprofil senkrecht zur Rotorblattlängsrichtung und
- Fig. 8: eine Darstellung von zwei schrägen Halbprofilen und einem Halbprofil senkrecht zur Längsachse des Rotorblattes sowie zwei Messstrecken.

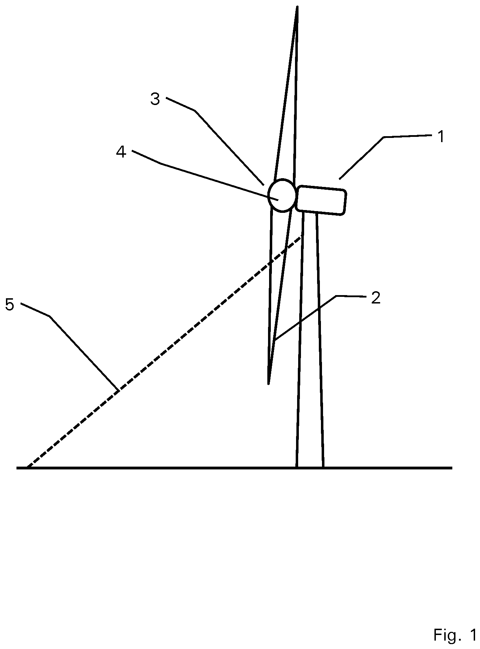

Figur 1 zeigt eine Seitenansicht einer Windenergieanlage 1 mit einem Rotor 3 mit einer Narbe 4 und drei Rotorblättern 2, von denen in dieser Darstellung nur zwei gezeigt sind. Ein Laserstrahl eines Laserentfernungsmessers ist entlang einer Messstrecke 5 auf den Rotor ausgerichtet.

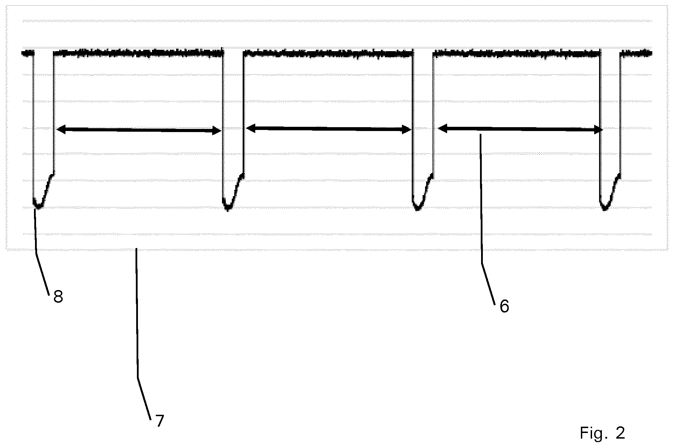

Figur 2 zeigt eine zeitaufgelöste Darstellung der Messwerte des Laserentfernungsmessers aus Figur 1. Dargestellt ist eine Zeitachse 7, über der die Entfernungsmesswerte 8 aufgetragen sind. Zu erkennen sind drei Rotorblattdurchgänge durch die Messstrecke 5 als Ausschläge der Messwerte nach unten. An den Enden der Ausschläge ist jeweils auch ein Halbprofil des jeweiligen Rotorblattes zu erkennen. Zwischen den Durchgängen der Rotorblätter sind als Doppelpfeile Zeitspannen zwischen den Rotorblattdurchgängen eingezeichnet.

Durch Vergleich der Zeitspannen, insbesondere deren Differenzen und/oder Verhältnisse, lassen sich Unwuchten erkennen. Dabei wird das Verhältnis der Zeitspannen, die den einzelnen Rotorblättern zugeordnet sind, indem sie dem nach der Zeitspanne die Messstrecke durchstreichenden Rotorblatt zugeordnet werden, als Maß für die relativen Gewichte der Rotorblätter verwendet.

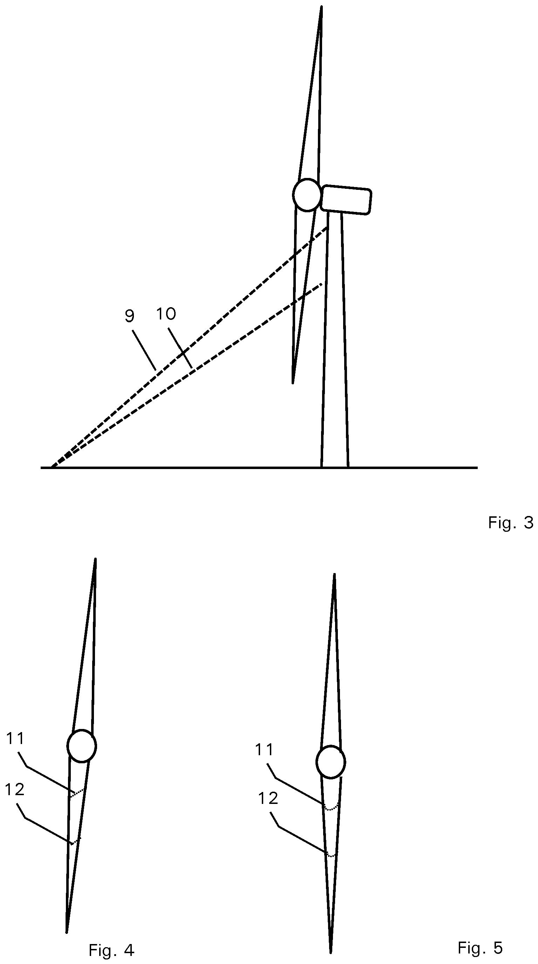

Figur 3 zeigt die Windenergieanlage aus Figur 1 in seitlicher Ansicht. Es sind auf zwei Messstrecken 9, 10 mit unterschiedlichen Winkeln gegen die Horizontale Laserentfernungsmesser auf den Rotor gerichtet.

Figur 4 zeigt den Rotor aus Figur 3 in der seitlichen Ansicht aus Figur 3. Gestrichelt eingezeichnet ist die Lage der durch die Laserentfernungsmessung auf den Messstrecken 9, 10 erfassten Halbprofile 11,12. Zu erkennen ist, dass die Profile gegenüber der Rotorlängsachse nicht senkrecht orientiert sind, sonder schräg zu dieser orientiert sind.

Figur 5 zeigt den Rotor aus Figur 4 in einer Frontansicht auf den Rotor. Gestrichelt eingezeichnet ist die Lage der durch die Laserentfernungsmessung auf den Messstrecken 9, 10 erfassten Halbprofile.

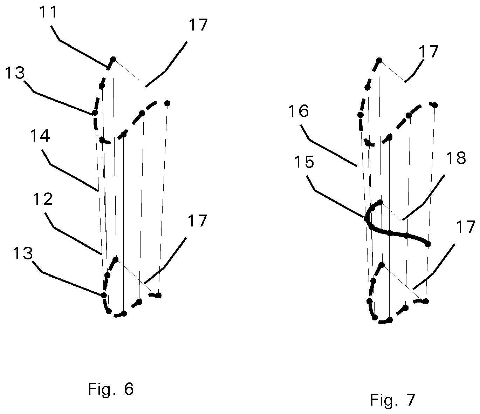

Figur 6 zeigt die Messlinien der Messungen der beiden Messstrecken 9, 10. Sie stellen Halbprofile 11,12 dar. Auf Ihnen sind Interpolationspunkte 13 eingezeichnet. Zwischen den Interpolationspunkten 13 sind Verbindungslinien 14 eingezeichnet. Dabei sind sie Interpolationspunkte 13 einer Verbindungslinie 14 so angeordnet bzw. gewählt, dass zwischen Ihrem Durchstreichen durch die Messstrecke ein sehr geringer zeitlicher Unterschied, insbesondere von weniger als 5 ms, liegt.

Figur 7 zeigt die Messlinien 11,12 aus Figur 6. Mithilfe der Verbindungslinien wurde die Rotorblattoberfläche 16 teilweise rekonstruiert. Die Linien zwischen den Interpolationspunkten 13 veranschaulichen dabei die rekonstruierte Rotorblattteiloberfläche. Gezeigt ist auch ein errechnetes Halbprofil 15 senkrecht zur Rotorblattlängsachse und parallel zu den Verknüpfungslinien 17, die in diesem Fall auch Linien 18 darstellen. Dieses wurde mithilfe der Verbindungslinien und einem Schnitt durch diese, senkrecht zur Rotorblattlängsachse ermittelt. Alternativ können aufgrund des Winkels zwischen der Horizontalen und den Messstrecken auf den Verbindungslinien entsprechende Punkte berechnet werden, die senkrecht zu einer Ebene liegen, welche, senkrecht zur Rotorblattlängsachse liegt und in der insbesondere eine Linie (18) senkrecht zur Hinterkante liegt.

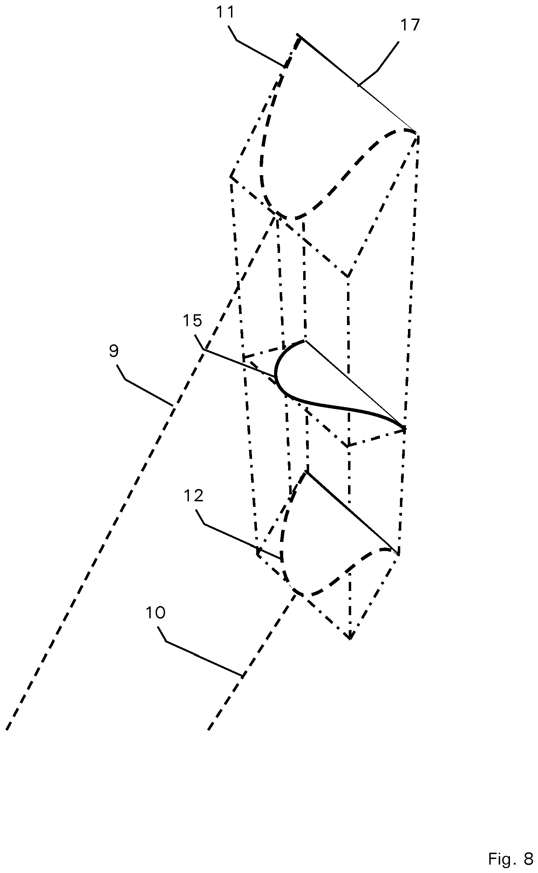

Figur 8 veranschaulicht diesen Sachverhalt noch einmal. Gezeigt sind zwei Messstrecken 9,10 sowie zwei schräge Halbprofile11,12, gebildet durch Messlinien, erfasst auf den Messstrecken. Ebenfalls zwischen den schrägen Halbprofilen 11,12 gezeigt ist ein Halbprofil senkrecht zur Rotorblattlängsachse, dass aus den schrägen Halbprofilen errechnet wurde. Die weiteren gestrichelten Linien, die einen schrägen Abschnitts eines Quaders darstellen, sind lediglich zur Veranschaulichung der Räumlichkeit vorgesehen.

### Bezugszeichenliste:

- 1: Windenergieanlage
- 2: Rotorblatt
- 3: Rotor
- 4: Narbe
- 5: Messstrecke
- 6: Zeitspanne
- 7: Zeitachse
- 8: Entfernungsmesswert
- 9: Erste Messstrecke
- 10: Zweite Messstrecke
- 11: Erstes schräges Halbprofil
- 12: Zweites schräges Halbprofil
- 13: Interpolationspunkt
- 14: Verbindungslinie
- 15: Halbprofil senkrecht zur Rotorblattlängsachse
- 16: Rekonstruierte Rotorblattteiloberfläche
- 17: Verknüpfungslinie
- 18: Linie

## Patentansprüche

1. Verfahren zur, insbesondere unabhängigen, Ermittlung und/oder Vermessung einer Unwucht, insbesondere zumindest einer statischen Unwucht, und/oder eines exzentrischen Massenmoments eines um eine Rotorachse drehenden Rotors (3) aufweisend mindestens zwei Rotorblätter (2), wobei durch kontaktlose und zeitaufgelöste Messung das Durchstreichen der Rotorblätter zumindest einer Messstrecke (5) während Rotation des Rotors um die Rotorachse erfasst wird,
**dadurch gekennzeichnet, dass** die Ermittlung und/oder Vermessung mittels Ermitteln von Zeitspannen (6) zwischen dem Durchstreichen der Messstrecke von unterschiedlichen, insbesondere aufeinander folgenden, Rotorblättern erfolgt.

2. Verfahren zur Ermittlung und/oder Vermessung nach Anspruch 1, beinhaltend das Vergleichen von Zeitenspannen, insbesondere das Ermitteln von Differenzen zwischen den Zeitenspannen, zwischen dem Durchstreichen, insbesondere jeweils aufeinander folgender, Rotorblätter.

3. Verfahren zur Ermittlung und/oder Vermessung nach einem der vorstehenden Ansprüche, beinhaltend das Normieren der Zeitspannen in Bezug auf die Rotationsgeschwindigkeit, welche durch Daten der kontaktlosen und zeitaufgelösten Messung ermittelt wird.

4. Verfahren zur Ermittlung und/oder Vermessung nach einem der vorstehenden Ansprüche, beinhaltend das Zuordnen der Zeitspannen oder normierten Zeitenspannen zwischen dem Durchstreichen von, insbesondere aufeinander folgenden, Rotorblättern zu dem nach der jeweiligen Zeitspanne die mindestens eine Messstrecke durchstreichenden Rotorblatts.

5. Verfahren zur Ermittlung und/oder Vermessung nach einem der vorstehenden Ansprüche, wobei die Messstrecke so angeordnet ist und/oder wird, dass sie innerhalb eines oder mehreren Kreissegmenten eines Kreises um die Rotorachse von den Rotorblättern durchstrichen werden, die sich in einem Winkelbereich von +/- 20°, insbesondere um die Vertikale, erstrecken.

6. Verfahren zur Ermittlung und/oder Vermessung nach einem der vorstehenden Ansprüche, unter Verwendung einer mobilen Messvorrichtung, die Vorrichtungen zur kontaktlosen Entfernungsmessung entlang von Messstrecken aufweist, wobei die Durchführung insbesondere unabhängig von ortsfesten Referenzpunkten und/oder unabhängig von weiteren Messinstrumenten, insbesondere weiteren Sensoren, insbesondere solchen mit direktem Kontakt oder bekannter Anordnung zum Rotor und/oder unabhängig von weiteren Informationen bezüglich der Ausgestaltung, insbesondere Geometrie der Rotorblätter und/oder Anordnung der Messstrecken und/oder Messvorrichtung relativ zum Rotor.

## Claims

1. A method for determining and/or measuring, in particular independently, an imbalance, in particular at least a static imbalance, and/or an eccentric mass moment of a rotor (3) rotating about a rotor axis and having at least two rotor blades (2), wherein the sweep of the rotor blades of at least one measuring section (5) during rotation of the rotor about the rotor axis is detected by contactless and time-resolved measurement,
**characterised in that** the determination and/or measurement is carried out by determining time intervals (6) between the sweeps of the measuring section of different, in particular successive, rotor blades.

2. A method for determining and/or measuring according to claim 1, including the comparison of time spans, in particular the determination of differences between the time spans, between the sweeps of, in particular, successive rotor blades.

3. A method for determining and/or measuring according to one of the preceding claims, comprising normalising the time spans with respect to the rotational speed, which is determined by data of the contactless and time-resolved measurement.

4. A method for determining and/or measuring according to one of the preceding claims, comprising assigning the time spans or normalised time spans between the sweeping of, in particular successive, rotor blades to the rotor blade sweeping the at least one measuring section after the respective time span.

5. A method for determining and/or measuring according to one of the preceding claims, wherein the measuring section is and/or is arranged such that it is swept by the rotor blades within one or more circular segments of a circle about the rotor axis, which segments extend in an angular range of +/- 20°, in particular about the vertical.

6. A method for determining and/or measuring according to one of the preceding claims, using a mobile measuring device which has devices for contactless distance measurement along measuring sections, the implementation being carried out in particular independently of fixed reference points and/or independently of further measuring instruments, in particular further sensors, in particular those with direct contact or known arrangement to the rotor and/or independently of further information relating to the design, in particular geometry of the rotor blades and/or arrangement of the measuring sections and/or measuring device relative to the rotor.

## Revendications

1. Procédé pour déterminer et/ou mesurer, en particulier de manière indépendante, un déséquilibre, en particulier au moins un déséquilibre statique, et/ou un moment de masse excentrique d'un rotor (3) tournant autour d'un axe de rotor et ayant au moins deux pales de rotor (2), dans lequel le balayage des pales de rotor d'au moins une section de mesure (5) pendant la rotation du rotor autour de l'axe de rotor est détecté par une mesure sans contact et résolue dans le temps,
**caractérisé par le fait que** la détermination et/ou la mesure est effectuée en déterminant des intervalles de temps (6) entre les balayages de la section de mesure de différentes pales de rotor, en particulier successives.

2. Procédé de détermination et/ou de mesure selon la revendication 1, comprenant la comparaison d'intervalles de temps, en particulier la détermination de différences entre les intervalles de temps, entre les balayages, en particulier, de pales de rotor successives.

3. Procédé de détermination et/ou de mesure selon l'une des revendications précédentes, comprenant la normalisation des intervalles de temps par rapport à la vitesse de rotation, qui est déterminée par les données de la mesure sans contact et résolue dans le temps.

4. Procédé de détermination et/ou de mesure selon l'une des revendications précédentes, comprenant l'attribution des intervalles de temps ou des intervalles de temps normalisés entre le balayage des pales de rotor, en particulier successives, à la pale de rotor balayant ladite au moins une section de mesure après l'intervalle de temps respectif.

5. Procédé de détermination et/ou de mesure selon l'une des revendications précédentes, dans lequel la section de mesure est et/ou est disposée de manière à être balayée par les pales du rotor dans un ou plusieurs segments circulaires d'un cercle autour de l'axe du rotor, lesquels segments s'étendent dans une plage angulaire de +/- 20°, en particulier autour de la verticale.

6. Procédé de détermination et/ou de mesure selon l'une des revendications précédentes, utilisant un dispositif de mesure mobile doté de dispositifs de mesure de distance sans contact le long de sections de mesure, la mise en oeuvre étant effectuée en particulier indépendamment de points de référence fixes et/ou indépendamment d'autres instruments de mesure, en particulier d'autres capteurs, en particulier ceux ayant un contact direct ou une disposition connue avec le rotor et/ou indépendamment d'autres informations relatives à la conception, en particulier à la géométrie des pales du rotor et/ou à la disposition des sections de mesure et/ou du dispositif de mesure par rapport au rotor.
